# EUROPEAN PATENT SPECIFICATION

(11) **EP 0 474 338 B1**
(45) Date of publication and mention of the grant of the patent: **27.09.1995**
(21) Application number: 91306005.9
(22) Date of filing: 02.07.1991
(51) Int. Cl.: F16H 39/12

(54) **Hydraulic transmission system**
Hydraulisches Antriebssystem
Transmission hydraulique

(30) Priority: 02.07.1990 JP 174896/90
(43) Date of publication of application: 11.03.1992
(73) Proprietor: HONDA GIKEN KOGYO KABUSHIKI KAISHA, Minato-ku, Tokyo (JP)
(72) Inventor: Maesaka, Kiyotomi, Wako-shi, Saitama (JP); Ishimoto, Makiro, Wako-shi, Saitama (JP); Ishikawa, Tomoaki, Wako-shi, Saitama (JP)
(74) Representative: Leale, Robin George

(56) References cited:
- EP-A- 0 089 416
- CA-A- 1 169 333
- DE-A- 1 425 817
- DE-A- 2 643 180
- DE-A- 3 516 747
- DE-B- 1 924 010
- US-A- 3 465 520
- Kraftfahrtechnisches Taschenbuch, 19. Auflage, 1984, page 340

## Description

The present invention relates to a hydraulic transmission system comprising an oil motor and an oil pump for hydraulically actuating the oil motor, and more particularly to a hydraulic transmission system which has a means for removing air trapped in oil circulating in the hydraulic transmission system.

One known hydraulic transmission system is disclosed in U.S. patent No. 4,856,264, for example. The disclosed hydraulic transmission system is disadvantageous in that when an engine coupled to the hydraulic transmission system is started, air tends to be trapped in oil that is fed into the hydraulic transmission system.

In view of the foregoing shortcoming of the conventional hydraulic transmission system, it is an object of the present invention to provide a hydraulic transmission system which can quickly remove trapped air from a hydraulic circuit at all times even while the hydraulic transmission system is in operation.

From Kraftfahrtechnisches Taschenbuch", 19th Edition of 1984 there is known a hydraulic transmission system comprising: a housing having at least an oil tank for containing oil; an oil pump mounted in said housing and having an inlet port and an outlet port; an oil motor mounted in said housing and having an inlet port and an outlet port; a high-pressure oil passage interconnecting the outlet port of said oil pump and the inlet port of said oil motor; a low-pressure oil passage interconnecting the outlet port of said oil motor and the inlet port of said oil pump.

The present invention is characterised in that said high and low pressure oil passages are defined in said housing and in that said transmission system further comprises: an oil supply passage defined in said housing; and interconnecting said low-pressure oil passage and said oil tank, for supplying oil pumped from said oil tank by said oil pump for circulation between said oil pump and said oil motor through said high-pressure oil passage and said low-pressure oil passage; and a return oil passage defined in said housing and connecting at least a portion of said low-pressure oil passage to said oil tank, for removing air trapped in the oil circulating between said oil pump and said oil motor.

The return oil passage preferably connects a portion of the low-pressure oil passage which extends between the outlet port of the oil motor and the oil supply passage, to the oil tank. More preferably, the low-pressure oil passage has a linear portion extending from the outlet port of the oil motor, a bent portion connected to the linear portion, and a portion extending from the bent portion and connected to the inlet port of the oil pump, and the return oil passage extends from the linear portion in line therewith and connected to the oil tank.

Some embodiments of the invention will now be described by way of example and with reference to the accompanying drawings, in which:-
FIG. 1 is a front elevational view, partly in cross section, of a hydraulic transmission system according to the present invention, the view showing an oil pump;
FIG. 2 is a vertical cross-sectional view of the hydraulic transmission system, the view showing an oil motor;
FIG. 3 is a horizontal cross-sectional view showing an oil passage arrangement between the oil pump and the oil motor in the hydraulic transmission system;
FIG. 4 is a front elevational view of a housing of the hydraulic transmission system, with a cover removed to show a return oil passage;
FIG. 5 is a cross-sectional view taken along line V - V of FIG. 4;
FIG. 6 is a circuit diagram of a hydraulic pressure circuit according to a first embodiment of the present invention, for the hydraulic transmission system;
FIG. 7 is a circuit diagram of a hydraulic pressure circuit according to a second embodiment of the present invention, for the hydraulic transmission system;
FIG. 8 is a circuit diagram of a hydraulic pressure circuit according to a third embodiment of the present invention, for the hydraulic transmission system;
FIG. 9 is a circuit diagram of a hydraulic pressure circuit according to a fourth embodiment of the present invention, for the hydraulic transmission system.

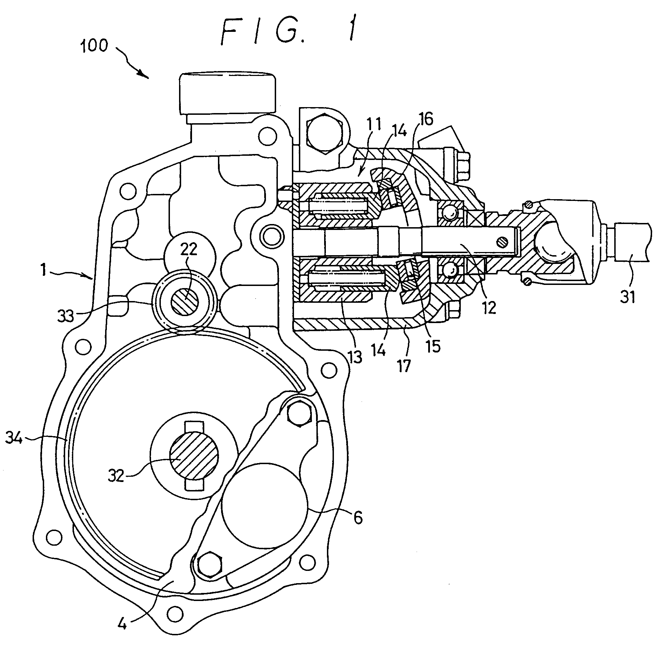

FIGS. 1 through 3 show a hydraulic transmission system 100 according to the present invention. The hydraulic transmission system 100 generally comprises a housing 1, an oil pump 11, and an oil motor 21. The oil pump 11 and the oil motor 21 are mounted in the housing 1 with their axes directed perpendicularly to each other.

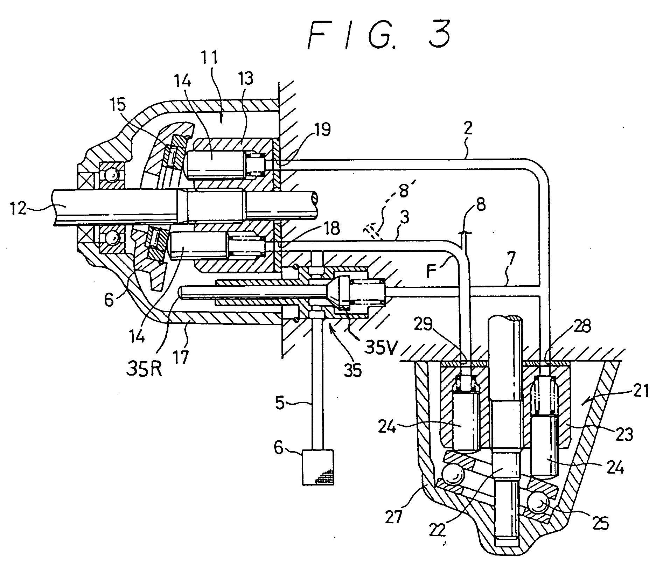

As shown in FIG. 1, the oil pump 11 comprises a pump shaft 12 rotatably mounted in a pump case 17, a cylinder assembly 13 splined to the pump shaft 12 and having a circular array of cylinder bores, a plurality of pistons 14 slidably fitted in the respective cylinder bores in the cylinder assembly 13, and a swash plate 16 slidably held against the tip ends of the pistons 14 through a thrust bearing 15. As shown in FIG. 3, the oil pump 11 has an inlet port 18 and an outlet port 19. To the pump shaft 12, there is connected an input shaft 31 that is coupled to an engine (not shown).

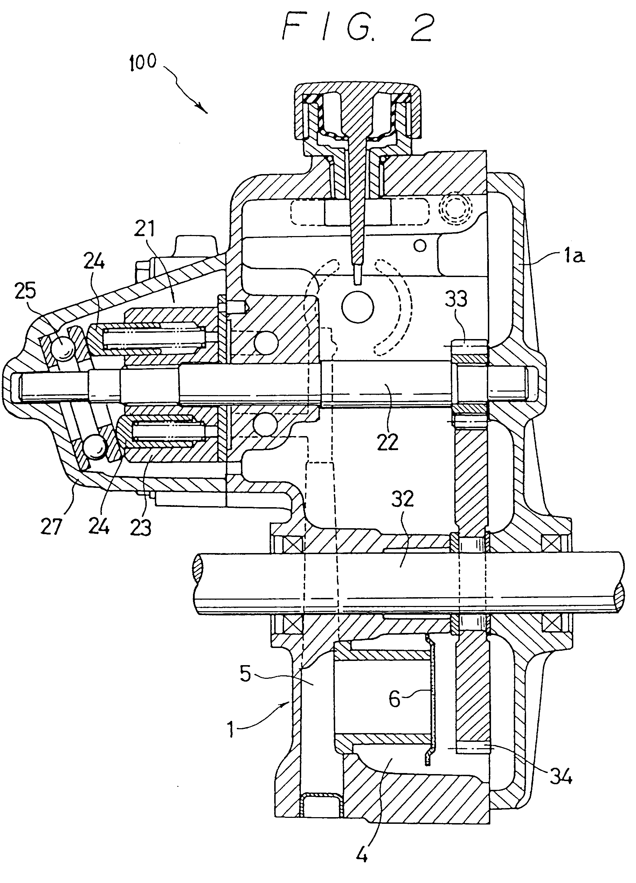

As shown In FIG. 2, the oil motor 21 comprises a motor shaft 22 rotatably mounted in a motor case 27, a cylinder assembly 23 splined to the motor shaft 22 and having a circular array of cylinder bores, a plurality of pistons 24 slidably fitted in the respective cylinder bores in the cylinder assembly 23, and a swash-plate bearing 25 slidably held against the tip ends of the pistons 24. As shown in FIG. 3, the oil motor 21 has an inlet port 28 and an outlet port 29. The motor shaft 22 extends transversely in the housing 1 and is rotatably supported at one end by a cover 1a attached to one side of the housing 1.

As shown in FIGS. 1 and 2, the hydraulic transmission system 100 has an output shaft 32 extending parallel to the motor shaft 22 and rotatably supported by the housing 1 and the cover 1a. The output shaft 32 is operatively coupled to the motor shaft 22 through speed-reducer gears 33, 34.

As shown in FIG. 3, the housing 1 defines, in its wall, a high-pressure oil passage 2 interconnecting the outlet port 19 of the oil pump 11 and the inlet port 28 of the oil motor 21, a low-pressure oil passage 3 interconnecting the outlet port 29 of the oil motor 21 and the inlet port 18 of the oil pump 11, and an oil supply passage 5 interconnecting the low-pressure oil passage 3 and an oil tank 4 in the bottom of the housing 1. As shown in FIG. 2, an oil filter 6 is attached over an open end of the oil supply passage 5 which opens into the oil tank 4.

The high-pressure oil passage 2 and the oil supply passage 5 are interconnected by a bypass oil passage 7 which is also defined in the wall of the housing 1. The bypass oil passage 7 has a neutral-position directional control valve mechanism 35 which is actuatable by the swash plate 16.

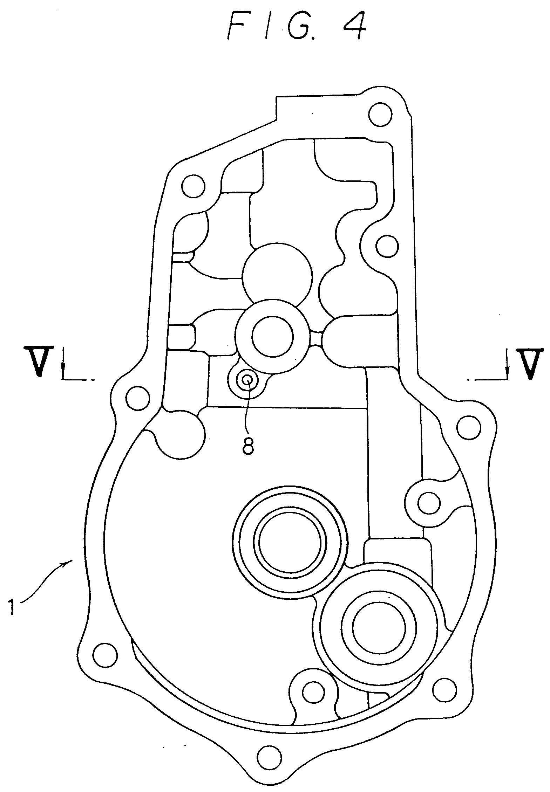

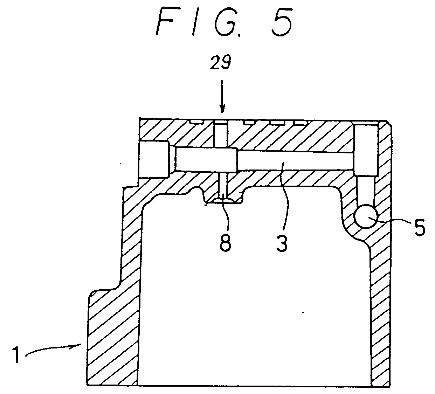

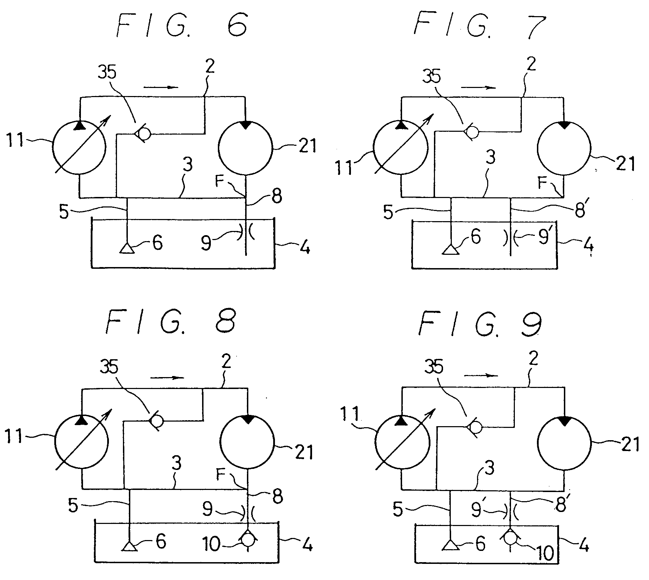

As illustrated in FIG. 3, the low-pressure oil passage 3 extends linearly in the vicinity of the outlet port 29 of the oil motor 21 or by a certain distance from the outlet port 29, is then bent at a portion F through about 90 degrees, and extends to and is connected to the inlet port 18 of the oil pump 11. The bent portion F of the low-pressure oil passage 3 has a return oil passage 8 which communicates with the oil tank 4. As shown in FIGS. 3 through 5, the return oil passage 8 extends substantially in line with the linear portion of the low-pressure oil passage 3 which extends from the outlet port 29. The return oil passage 8 is in the form of a small hole having a cross-sectional area smaller than that of the low-pressure oil passage 3. As shown in FIG. 6, the return oil passage 8 serves as a restriction or choke 9.

When the output power from the engine is to be transmitted from the input shaft 31 to the output shaft 32 and the neutral-position directional control valve mechanism 35 closes the bypass oil passage 7, oil is circulated between the oil pump 11 and the oil motor 21 to actuate the oil motor 21. More specifically, when the pump shaft 12 rotates, the pistons 14 reciprocally move to supply oil under pressure to the cylinder assembly 23 of the oil motor 21 through the high-pressure oil passage 2, thereby reciprocally moving the pistons 24. The oil is then returned from the piston assembly 23 through the low-pressure oil passage 3 back to the oil pump 11. The motor shaft 22 rotates upon such circulation of the oil between the oil pump 11 and the oil motor 21. The rotative power is transmitted from the motor shaft 22 through the speed-reducer gears 33, 34 to the output shaft 32.

When the swash plate 16 is angularly displaced into a neutral position (e.g., when the swash plate 16 which is inclined at an angle to the pump shaft 12 is angularly displaced so as to be perpendicular to the pump shaft 12), the swash plate 16 engages and pushes a projecting end 35R of the rod of the neutral-position directional control valve mechanism 35, moving a valve body 35V to open the bypass oil passage 7. Therefore, the high-pressure oil passage 2 communicates with the oil supply passage 5. The transmission of rotative power to the motor shaft 22 is now stopped, making the motor shaft 22 and the output shaft 32 freely rotatable.

Removal of trapped air from the circulating oil in the hydraulic transmission system will now be described below.

FIG. 6 shows a hydraulic pressure circuit according to a first embodiment of the present invention, for the hydraulic transmission system. As shown in FIG. 6, when the engine starts, part of oil with trapped air is smoothly discharged through the return oil passage 8 linearly extending from the outlet port 29 of the oil motor 21. More specifically, since the return oil passage 8 is smaller in cross-sectional area than the low-pressure oil passage 3, providing the restriction or choke 9, part of oil with trapped air flows at increased speed and is quickly discharged from the return oil passage 8, preventing a negative pressure from being developed in the portion of the low-pressure oil passage 3 which extends past the return oil passage 8. Inasmuch as the oil circulating in the hydraulic pressure circuit flows through the right-angularly bent portion F of the low-pressure oil passage 3, but the return oil passage 8 opening into the bent portion F is directed in line with the linear portion of the low-pressure oil passage 3 extending from the outlet port 29, oil with trapped air is smoothly discharged from the low-pressure oil passage 3.

At least part of the oil discharged by the oil motor 21 returns from the low-pressure oil passage 3 to the oil tank 4, and the oil in the oil tank 4 is supplied again from the oil supply passage 5 to the low-pressure oil passage 3 through the oil filter 6. While the oil is circulating in this manner, trapped air is thoroughly removed from the oil by the oil filter 6. This process is repeated to remove trapped air quickly and smoothly from the hydraulic pressure circuit.

FIG. 7 shows a hydraulic pressure circuit according to a second embodiment of the present invention, for the hydraulic transmission system. In FIG. 7, a return oil passage 8' is positioned more closely to the bent portion F than the oil supply passage 5 (see also FIG. 3). The diameter (i.e., the cross-sectional area) of the return oil passage 8' may be slightly increased for quick removal of trapped air from the hydraulic pressure circuit. The return oil passage 8' should preferably be inclined toward the oil supply passage 5 so that oil with trapped air flowing through the low-pressure oil passage 3 finds it easy to enter the return oil passage 8'.

FIGS. 8 and 9 show hydraulic pressure circuits according to third and fourth embodiments, respectively, of the present invention, for the hydraulic transmission system. The hydraulic pressure circuits shown in FIGS. 8 and 9 differ from those shown in FIGS. 6 and 7 in that each of the return oil passages 8, 8' has a check valve or one-way valve 10 for preventing oil from flowing back from the oil tank 4 into the return oil passages 8, 8'.

With the present invention, as described above, the return oil passage positioned between the outlet port of the oil motor and the oil supply passage, for returning at least part of the circulating oil to the oil tank, allows air trapped in the oil to be quickly removed out of the hydraulic pressure circuit while the hydraulic transmission system is in operation.

## Claims

1. A hydraulic transmission system comprising:
a housing (1) having at least an oil tank (4) for containing oil;
an oil pump (11) mounted in said housing and having an inlet port (18) and an outlet port (19);
an oil motor (21) mounted in said housing and having an inlet port (28) and an outlet port (29);
a high-pressure oil passage (2) interconnecting the outlet port of said oil pump and the inlet port of said oil motor;
a low-pressure oil passage (3) interconnecting the outlet port of said oil motor and the inlet port of said oil pump;
characterised in that said high and low pressure oil passages are defined in said housing and in that said transmission system further comprises:
an oil supply passage (5) defined in said housing and interconnecting said low-pressure oil passage and said oil tank, for supplying oil pumped from said oil tank by said oil pump for circulation between said oil pump and said oil motor through said high-pressure oil passage and said low-pressure oil passage; and
a return oil passage (8, 8') defined in said housing and connecting at least a portion of said low-pressure oil passage to said oil tank, for removing air trapped in the oil circulating between said oil pump and said oil motor.

2. A hydraulic transmission system according to claim 1, wherein said return oil passage (8, 8') connects a portion of said low-pressure oil passage (3) which extends between the outlet port of said oil motor (29) and said oil supply passage (5), to said oil tank.

3. A hydraulic transmission system according to claim 1 or 2, wherein said low-pressure oil passage (3) has a linear portion extending from the outlet port (29) of said oil motor (21), a bent portion (F) connected to said linear portion, and a portion extending from said bent portion and connected to the inlet port (18) of said oil pump (11), said return oil passage (8, 8') extending from said linear portion in line therewith and being connected to said oil tank (4).

4. A hydraulic transmission system according to claim 3, wherein said return oil passage (8') connects a portion of said low-pressure oil passage (3) which is positioned more closely to said oil supply passage (5) than said bent portion (F), to said oil tank (4).

5. A hydraulic transmission system according to claim 4, wherein said return oil passage (8') is inclined from said portion of the low-pressure oil passage (3) toward said oil supply passage (5).

6. A hydraulic transmission system according to any preceding claim, further including a one-way valve (10) connected to said return oil passage (8, 8'), for preventing the oil from flowing back from said oil tank (4) into said return oil passage.

7. A hydraulic transmission system according to any preceding claim, wherein said return oil passage (8, 8') comprises a small-hole oil passage having a cross-sectional area which is smaller than the cross-section area of said low-pressure oil passage (3), thereby providing a choke.

8. A hydraulic transmission system according to any preceding claim, wherein said oil supply passage (5) has an oil filter (6) disposed in said oil tank (4), for removing trapped air from the oil when the oil returned from said return oil passage (8, 8') to said oil tank flows through said oil filter.

## Patentansprüche

1. Hydraulisches Übertragungssystem, umfassend:
ein Gehäuse (1) mit wenigstens einem Öltank (4) zur Aufnahme von Öl;
eine in dem Gehäuse angebrachte Ölpumpe (11) mit einem Einlaßanschluß (18) und einem Auslaßanschluß (19);
einen in dem Gehäuse angebrachten Ölmotor (21) mit einem Einlaßanschluß (28) und einem Auslaßanschluß (29),
einen Hochdruck-Öldurchlaß (2), welcher den Auslaßanschluß der Ölpumpe und den Einlaßanschluß des Ölmotors miteinander verbindet;
einen Niederdruck-Öldurchlaß (3), welcher den Auslaßanschluß des Ölmotors und den Einlaßanschluß der Ölpumpe miteinander verbindet;
dadurch gekennzeichnet,
daß der Hoch- und der Niederdruck-Öldurchlaß in dem Gehäuse ausgebildet sind, und daß das Übertragungssystem ferner umfaßt:
einen in dem Gehäuse ausgebildeten Ölzuführdurchlaß (5), welcher den Niederdruck-Öldurchlaß und den Öltank miteinander verbindet, um durch die Ölpumpe aus dem Öltank gepumptes Öl zur Zirkulation zwischen der Ölpumpe und dem Ölmotor durch den Hochdruck-Öldurchlaß und den Niederdruck-Öldurchlaß zuzuführen; und
einen in dem Gehäuse ausgebildeten Ölrückführdurchlaß (8, 8'), welcher wenigstens einen Abschnitt des Niederdruck-Öldurchlasses mit dem Öltank verbindet, um in dem zwischen der Ölpumpe und dem Ölmotor zirkulierenden Öl eingeschlossene Luft zu entfernen.

2. Hydraulisches Übertragungssystem nach Anspruch 1, worin der Ölrückführdurchlaß (8, 8') einen Abschnitt des Niederdruck-Öldurchlasses (3), welcher sich zwischen dem Auslaßanschluß des Ölmotors (29) und dem Ölzuführdurchlaß (5) erstreckt, mit dem Öltank verbindet.

3. Hydraulisches Übertragungssystem nach Anspruch 1 oder 2, worin der Niederdruck-Öldurchlaß (3) einen sich von dem Auslaßanschluß (29) des Ölmotors (21) erstreckenden geraden Abschnitt, einen mit dem geraden Abschnitt verbundenen gebogenen Abschnitt (F) und einen sich von dem gebogenen Abschnitt erstreckenden und mit dem Einlaßanschluß (18) der Ölpumpe (11) verbundenen Abschnitt aufweist, wobei der Ölrückführdurchlaß (8, 8') sich von dem geraden Abschnitt in Linie mit diesem erstreckt und mit dem Öltank (4) verbunden ist.

4. Hydraulisches Übertragungssystem nach Anspruch 3, worin der Ölrückführdurchlaß (8') einen Abschnitt des Niederdruck-Öldurchlasses (3), welcher näher an dem Ölzuführdurchlaß (5) angeordnet ist als der gebogene Abschnitt (F), mit dem Öltank (4) verbindet.

5. Hydraulisches Übertragungssystem nach Anspruch 4, worin der Ölrückführdurchlaß (8') von dem Abschnitt des Niederdruck-Öldurchlasses (3) in Richtung zu dem Ölzuführdurchlaß (5) geneigt ist.

6. Hydraulisches Übertragungssystem nach einem der vorhergehenden Ansprüche, ferner umfassend ein mit dem Ölrückführdurchlaß (8, 8') verbundenes Einwegventil (10), um zu verhindern, daß das Öl von dem Öltank (4) in den Ölrückführdurchlaß zurückfließt.

7. Hydraulisches Übertragungssystem nach einem der vorhergehenden Ansprüche, worin der Ölrückführdurchlaß (8, 8') einen kleinen, lochförmigen Öldurchlaß mit einer Querschnittsfläche umfaßt, welche kleiner ist als die Querschnittsfläche des Niederdruck-Öldurchlasses (3), wodurch eine Drosselvorrichtung vorgesehen ist.

8. Hydraulisches Übertragungssystem nach einem der vorhergehenden Ansprüche, worin der Ölzuführdurchlaß (5) einen in dem Öltank (4) angeordneten Ölfilter (6) aufweist, um eingeschlossene Luft aus dem Öl zu entfernen, wenn das von dem Ölrückführdurchlaß (8, 8') zu dem Öltank zurückgeführte Öl durch den Ölfilter fließt.

## Revendications

1. Dispositif de transmission hydraulique comportant:
un boîtier (1) ayant au moins un réservoir d'huile (4) destiné à contenir de l'huile;
une pompe à huile (11) agencée dans ledit boîtier et ayant un orifice d'entrée (18) et un orifice de sortie (19);
un moteur à huile (21) agencé dans ledit boîtier ayant un orifice d'entrée (28) et un orifice de sortie (29);
un passage (2) d'huile à haute pression reliant de manière mutuelle l'orifice de sortie de ladite pompe à huile et l'orifice d'entrée dudit moteur à huile;
un passage (3) d'huile à faible pression reliant de manière mutuelle l'orifice de sortie dudit moteur à huile et l'orifice d'entrée de ladite pompe à huile,
caractérisé en ce que lesdits passages d'huile à haute et à faible pression sont définis dans ledit boîtier et en ce que ledit dispositif de transmission comporte en outre:
un passage (5) d'alimentation d'huile défini dans ledit boîtier et reliant de manière mutuelle ledit passage d'huile à faible pression et ledit réservoir d'huile, pour alimenter l'huile pompée à partir dudit réservoir d'huile par ladite pompe à huile pour la mettre en circulation entre ladite pompe à huile et ledit moteur à huile à travers ledit passage d'huile à haute pression et ledit passage d'huile à faible pression; et
un passage de retour d'huile (8, 8') défini dans ledit boîtier et reliant au moins une partie dudit passage d'huile à faible pression audit réservoir d'huile, pour enlever l'air emprisonné dans l'huile circulant entre ladite pompe à huile et le moteur à huile.

2. Dispositif de transmission hydraulique selon la revendication 1, dans lequel ledit passage de retour d'huile (8, 8') relie une partie dudit passage (3) d'huile à faible pression qui s'étend entre l'orifice de sortie (29) dudit moteur à huile et ledit passage (5) d'alimentation d'huile, audit réservoir d'huile.

3. Dispositif de transmission hydraulique selon la revendication 1 ou 2, dans lequel ledit passage (3) d'huile à faible pression a une partie linéaire s'étendant à partir de l'orifice de sortie (29) dudit moteur à huile (21), une partie incurvée (F) reliée à ladite partie linéaire, et une partie s'étendant à partir de ladite partie incurvée et reliée à l'orifice d'entrée (18) de ladite pompe à huile (11), ledit passage de retour d'huile (8, 8') s'étendant à partir de ladite partie linéaire en ligne avec celle-ci et étant relié audit réservoir d'huile.

4. Dispositif de transmission hydraulique selon la revendication 3, dans lequel ledit passage de retour d'huile (8') relie une partie dudit passage (3) d'huile à faible pression qui est positionnée plus proche dudit passage (5) d'alimentation d'huile que ladite partie incurvée (F), audit réservoir d'huile (4).

5. Dispositif de transmission hydraulique selon la revendication 4, dans lequel ledit passage de retour d'huile (8') est incliné à partir de ladite partie du passage d'huile à faible pression (3) vers ledit passage d'alimentation d'huile (5).

6. Dispositif de transmission hydraulique selon l'une quelconque des revendications précédentes, comportant en outre une vanne unidirectionnelle (10) reliée audit passage de retour d'huile (8, 8'), pour empêcher l'huile de revenir à partir dudit réservoir d'huile (4) à l'intérieur dudit passage de retour d'huile.

7. Dispositif de transmission hydraulique selon l'une quelconque des revendications précédentes, dans lequel ledit passage de retour d'huile (8, 8') comporte un passage d'huile formant petit trou ayant une surface en coupe qui est plus petite que la surface en coupe dudit passage d'huile à faible pression (3), fournissant par conséquent un étranglement.

8. Dispositif de transmission hydraulique selon l'une quelconque des revendications précédentes, dans lequel ledit passage d'alimentation d'huile (5) a un filtre à huile (6) agencé dans ledit réservoir d'huile (4), pour enlever l'air emprisonné dans l'huile lorsque l'huile retournant à partir dudit passage de retour d'huile (8, 8') vers ledit réservoir d'huile s'écoule à travers ledit filtre à huile.
